# EUROPÄISCHE PATENTSCHRIFT

(11) **EP 1 094 913 B1**
(45) Veröffentlichungstag und Bekanntmachung des Hinweises auf die Patenterteilung: **01.10.2003**
(21) Anmeldenummer: 99947193.1
(22) Anmeldetag: 08.07.1999
(51) Int. Cl.: B23K 9/00

(54) **VORRICHTUNG ZUR ÜBERWACHUNG VON SCHWEISSSTELLEN**
DEVICE FOR MONITORING WELDS
DISPOSITIF POUR CONTROLER DES SOUDURES

(30) Priorität: 08.07.1998 DE 19830492
(43) Veröffentlichungstag der Anmeldung: 02.05.2001
(73) Patentinhaber: Hillenbrand, Siegfried, 72461 Albstadt (DE)
(72) Erfinder: HILLENBRAND, Siegfried, D-72461 Albstadt (DE); ADAMITZKI, Wolfgang, D-09376 Oelsnitz (DE)
(74) Vertreter: Patentanwälte Eisele, Otten & Roth
(86) Internationale Anmeldenummer: DE9902109
(87) Internationale Veröffentlichungsnummer: WO00002696

(56) Entgegenhaltungen:
- EP-A- 0 320 442
- CASASENT ET AL.: "Intelligent robots: third international conference on robot vision and sensory controls RoViSeC3" PROCEEDINGS OF SPIE-THE INTERNATIONAL SOCIETY FOR OPTICAL ENGINEERING, Bd. 449, 10. November 1983 (1983-11-10), Seiten 217-224, XP002127906 Washington USA
- UMEAGUKWU ET AL.: "Robotic acoustic seam tracking: system development and application" TRANSACTIONS ON INDUSTRIAL ELECTRONICS, Bd. 36, Nr. 3, 1989, Seiten 338-348, XP000047823 New York USA

## Beschreibung

Die Erfindung betrifft eine Schweißvorrichtung mit einer überwachungsvorrichtung nach dem Oberbegriff des Anspruchs 1.

Üblicherweise werden in der industriellen Fertigung Schweißvorgänge halb- oder vollautomatisch mit Hilfe von entsprechenden Schweißautomaten vorgenommen. Der Schweißvorgang selbst kann mit unterschiedlichen Schweißwerkzeugen, beispielsweise Schweißbrennern oder aber auch mit Hilfe von Lasern, vorgenommen werden. In jedem Fall ist es wünschenswert, eine Kontrolle über das Schweißergebnis zu erhalten.

Bei der Kontrolle von Schweißvorgängen, insbesondere beim Punktschweißen und Bolzenschweißen wird bislang versucht, eine Überwachung auf der Grundlage von Ultraschall durchzuführen. Dies führt bislang nicht zu befriedigenden Ergebnissen. Andere Meßvorrichtungen wie Laservibrometer oder ähnliches sind einerseits sehr kostenträchtig und andererseits sehr empfindlich im Hinblick auf Umwelteinflüsse wie Rauch, Staub, Funken usw.

Bei vielen Schweißverfahren, beispielsweise beim Widerstandsschweißen oder Lichtbogenschweißen ist die Überwachung der Schweißqualität daher von Vorteil.

Aus diesem Grund existieren bereits Schweißvorrichtungen mit einer Überwachungsvorrichtung (UMEAGUKWU, C. et al.; Robotic Acustic Seam Tracking: System Development and Application; IEEE Transactions on Industrial Electronics; Vol. 36; No. 3; p. 338 - 348; 1989). Diese sind jedoch vergleichsweise aufwendig und relativ empfindlich gegenüber äußeren Umwelteinflüssen.

Aufgabe der Erfindung ist es daher, eine Vorrichtung vorzuschlagen, mit der ein Schweißvorgang ohne großen Aufwand berührungslos überwacht werden kann und gegenüber äußeren Umwelteinflüssen unempfindlich ist.

Diese Aufgabe wird durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Vorrichtung dadurch aus, daß ein Radarsensor mit einem Sender und einem Empfänger zum Senden bzw. Empfang elektromagnetischer Strahlung im Mikrowellen- und/oder Radarwellenbereich vorhanden ist.

Ein solcher Radarsensor hat eine ausreichend hohe lokale Auflösung, um Schweißstellen herkömmlicher Dimensionierung zuverlässig zu erfassen. Da die meisten Materialien transparent für die Strahlung des angegebenen Wellenbereichs ist, ist ein Radarsensor unempfindlich gegenüber äußeren Umwelteinflüssen wie Verunreinigungen, Dämpfen, Staub, Rauch, Lichtblitzen usw. im Bereich der Schweißstelle. Weiterhin ist ein Radarsensor unabhängig von den Lichtverhältnissen. Er ist insbesondere völlig unempfindlich gegenüber der häufig für Schweißvorgänge verwendeten Laserstrahlung.

Zur Auswertung des Empfangssignals können Referenzmessungen bei korrektem Schweißvorgang aufgenommen und die Meßdaten als Referenzdaten in einer entsprechenden Speichereinheit erfaßt werden. Je nach Anforderungen an die Güte der Schweißstelle können entsprechende Toleranzkriterien für die verschiedenen Erfassungsparameter, beispielsweise Intensität oder Frequenz der reflektierten Strahlung, vorgesehen werden, innerhalb derer das gemessene Signal einer korrekten Schweißstelle mit gewünschter Güte entspricht.

Bei einer nicht tolerierbaren Abweichung des Meßsignals vom Referenzsignal können verschiedene Reaktionen erfolgen. Entweder kann der Schweißvorgang mit einer auf der Grundlage der Meßdaten gewonnenen Stellgröße gesteuert bzw. geregelt werden oder aber die aufgenommenen Meßdaten dienen zur Erkennung von Ausschußware, die entsprechend markiert werden kann. Es wäre auch möglich, im Falle einer fehlerhaften Schweißstelle den Schweißautomat lediglich zu stoppen und ggf. ein Signal zu erzeugen, bis durch eine Bedienperson wieder die korrekten Schweißparameter eingestellt sind. Andere Verwertungsmöglichkeiten des Meßsignals aus dem Radarsensor sind je nach Anwendungsfall möglich.

In einer vorteilhaften Weiterbildung der Erfindung werden der Radarsensor und/oder die zu verschweißenden Gegenstände so angeordnet, daß eine Relativbewegung zwischen diesen beiden Bauteilen stattfinden kann. Hierdurch ergibt sich je nach Größe und Richtung der Relativbewegung eine Dopplerverschiebung der Frequenz des Sendesignals im Bezug zum Empfangssignal. Mit Hilfe einer entsprechenden Auswerteeinheit zur Erfassung dieser Frequenzdifferenz ergibt sich ein Frequenzspektrum, das nicht nur abhängig von der Relativgeschwindigkeit des Sensors bzw. der Reflexionsfläche, sondern auch abhängig von anderen Parametern der Reflexionsfläche, beispielsweise der Form oder dem Material, ist. Dieses Frequenzspektrum ist daher auch signifikant für die Güte der damit vermessenen Schweißstelle.

In einer vorteilhaften Weiterbildung der Erfindung wird der Radarsensor und wenigstens teilweise das Schweißwerkzeug an einer gemeinsamen Halterung befestigt. Hierdurch ergibt sich eine platzsparende Anordnung, wobei der Sensor zur Kontrolle der Güte der Schweißstelle in unmittelbarer Nähe der Schweißstelle angeordnet ist. Je nach Anwendungsfall kann zugleich eine etwaige Bewegung des Schweißwerkzeugs als Vorschub des Radarsensors bezüglich der zu vermessenden Schweißstelle verwendet werden, um das Dopplersignal, wie oben angeführt, auszuwerten.

Auch ohne gesteuerte Relativbewegung zwischen dem Radarsensor und der Schweißstelle ist eine Verwendung eines Doppler-Radarsensors von Vorteil, da durch das Schweißen selbst verschiedene Effekte, z. B. Vibrationen, usw. ausgelöst werden, die eine entsprechende Dopplerverschiebung verursachen.

In einer Weiterbildung der Erfindung wird zudem ein Wellenleiter am Radarsensor angebracht. Ein solcher Wellenleiter kann ähnlich wie bekannte Lichtleiter aus Vollmaterial bestehen oder als Hohlleiter ausgebildet werden. Bei entsprechender Temperaturstabilität kann ein Wellenleiter in die unmittelbare Nähe der Schweißstelle gebracht werden. In diesem Fall wird der Wellenleiter bevorzugt als metallischer oder keramischer Hohlleiter ausgebildet. Ein keramischer Hohlleiter wird hierzu mit entsprechenden leitenden Elementen versehen. In Frage kommen beispielsweise Oberflächenbeschichtungen, die Einarbeitung von Drahtgeflechten usw.

Ein derartig temperaturstabiler Wellenleiter kann wesentlich näher in den Bereich der heißen Schweißstelle gebracht werden, als ein aufgrund der notwendigerweise vorhandenen elektronischen Bauteile temperaturempfindlicher Radarsensor.

In einer bevorzugten Ausführungsform der Erfindung wird zudem ein Fokussierungselement am Radarsensor und/oder am Ausgang eines oben angeführten Wellenleiters angebracht. Ein solches Fokussierungselement kann beispielsweise in Form eines sogenannten Hornstrahlers oder aber auch einer Radarlinse angebracht werden. Sofern der Schweißvorgang in unmittelbarer Nähe der Schweißstelle beobachtet werden soll, ist auch hierbei auf die Temperaturstabilität des Fokussierungselementes zu achten.

Bei den derzeit bekannten Materialien wird daher ein metallischer Hornstrahler einer Linse vorzuziehen sein. Es ist jedoch durchaus möglich, daß aufgrund künftiger Materialien auch Linsen mit entsprechender Temperaturstabilität zur Verfügung stehen.

Die Vorteile der Fokussierung liegen darin, daß im Wesentlichen die tatsächlich zu beobachtende Schweißstelle im Erfassungsbereich der Strahlung des Radarsensors liegt und diese damit den überwiegenden Einfluß auf das Antwortsignal ausübt. Veränderungen im Verlaufe der Schweißstelle zeigen sich daher dementsprechend deutlicher im Antwortsignal des Radarsensors.

Bevorzugt wird die Sendefrequenz des Radarsensors schmalbandig ausgewählt, wobei durchaus mehrere Frequenzen mit einem entsprechenden Abstand verwendbar sind. Hierdurch erhält ein Dopplerspektrum bei Ausnutzung einer Relativbewegung zwischen dem Radarsensor und den zu verschweißenden Gegenständen eine größere Aussagekraft, da es zu keiner Überlagerung von Antwortsignalen aus verschiedenen Sendefrequenzen kommen kann.

Weiterhin empfiehlt es sich, die Wellenlänge des Sendesignals an die Breite der zu vermessenden Schweißstelle anzupassen. Die Wellenlänge sollte hierbei im Bereich der Schweißstellenbreite oder darunter liegen, um eine ausreichende lokale Auflösung zu gewährleisten.

Mit der Erfindung lassen sich alle möglichen Ausbildungen von Schweißstellen, insbesondere auch Schweißpunkte und Schweißnähte, überwachen.

Mit einem Radarsensor wird die Schweißstelle und ihre Umgebung beispielsweise auf Bewegung und Schwingungen überwacht, die insbesondere mit dem Doppler-Radar zu erfassen sind. Zugleich kann mit diesem Vorgang die Schweißvorrichtung selbst, beispielsweise beim Elektro-Schweißen die Elektrodengeometrie und die Elektrodenbewegung überwacht werden. Somit ist eine zusätzliche Prozeßkontrolle möglich, um frühzeitig Beschädigungen und Abnützungen des Schweißsystems, insbesondere von Elektroden, zu erkennen.

Gleichzeitig ist neben der Kontrolle der Güte der Schweißstelle die Überwachung der exakten Position der zu verschweißenden Teile möglich. So kann beim Bolzenschweißen z. B. gleichzeitig die Bolzenlage und die Bolzengeometrie überwacht werden. Auch diese Prüfmethode basiert unter anderem auf einer Analyse von Oberflächenschwingungen der zu verschweißenden Teile, z. B. eines Blechteils während des Schweißvorgangs.

Betrachtet man einen Schweißvorgang im Detail, so können sich beispielsweise folgende Einzelschritte ergeben:
1. Die zu verschweißenden Teile, beispielsweise Blech oder sonstige metallische Teile werden zwischen beispielsweise stabförmigen Elektroden positioniert und der Schweißvorgang ausgelöst.
2. Die beiden Elektroden bewegen sich aufeinander zu und berühren die Teile mit einem vorgegebenen Maximaldruck.
3. Die Bestromung der Elektroden erfolgt kurz nach der Berührung und wird über die Elektrodenposition gesteuert.
4. Durch die hohe Stromdichte und dem entsprechenden Materialwiderstand wird das Material örtlich sehr heiß und verformt sich, das heißt, es wird plastisch und gegebenenfalls sogar flüssig.
5. Die Elektroden werden nachgeführt, wobei die Eindringtiefe der Elektroden gewöhnlich als Kontrollparameter für den Schweißvorgang verwendet wird. Diese Eindringtiefe wird im übrigen in der Regel mechanisch begrenzt.
6. Anschließend wird die Stromzufuhr abgeschaltet und die auseinanderfahrenden Elektroden geben das verschweißte Teil frei.

Bei diesen Vorgängen, das heißt insbesondere bei der Berührung und der Freigabe des verschweißten Teils bzw. der zu verschweißenden Teile durch die Elektroden werden vornehmlich bei der Blechverschweißung Schwingungen angeregt bzw. beeinflußt.

So variieren beispielsweise die Materialschwingungen beim Aufbau der Andruckkräfte in der Umgebung der Elektrodenkontaktierung zeitlich in typischer Weise. Bei der Plastifizierung bzw. der Verflüssigung des Materials wird diese Schwingung abrupt gedämpft und somit ebenfalls deutlich beeinflußt. Beim Auseinanderfahren der Elektroden und dem damit verbundenen Aushärten der Schweißstelle treten wiederum Vibrationen auf, die sich von den vorhergehenden Signalen der unverschweißten Teile deutlich unterscheiden.

Diese Schwingungsvorgänge der Schweißteile bzw. -bleche in der Nähe der Schweißstelle können berührungslos mit dem Radarsensor verfolgt und mit der entsprechenden Auswerteeinheit ausgewertet werden.

Die Variation der Vibrationen an den Schweißteilen bzw. -blechen funktioniert ebenso bei anderen Schweißverfahren, beispielsweise beim Lichtbogenschweißen, das häufig zum Verschweißen von Bolzen auf Blechteilen eingesetzt wird.

Eine weitere Ausführung der Erfindung besteht darin, vor, während oder nach dem Verschweißen den Bereich der Schweißstelle durch Fremderregung zum Schwingen zu bringen und mit einem oder mehreren Radarsensoren diese Schwingungen zu beobachten. Bei nicht verschweißten oder nicht optimal verschweißten Teilen ergibt sich hierbei ein von einer korrekten Verschweißung unterschiedliches Schwingungsverhalten, das sich im entsprechenden Sensorsignal widerspiegelt.

Diese Fremderregung kann beispielsweise beim Punktschweißen verwendet werden, bei dem der gesamte Schweißvorgang insgesamt sehr schnell abläuft und die hierdurch verursachten Schwingungen verhältnismäßig schnell abklingen. Durch Fremderregung kann auch zu einem späteren Zeitpunkt nach dem Abklingen der beim Schweißen ausgelösten Schwingungen eine Schweißstelle noch kontrolliert werden.

Über die Beobachtung des Schwingungsverhaltens hinaus kann mit einem Radarsensor auch unmittelbar die Veränderung der Reflexionsfläche während des Schweißvorgangs beobachtet werden. So ergibt sich beim Übergang der starren aneinanderzuschweißenden Teilbereiche in die plastische Phase bzw. Schmelzphase im Bereich der Schweißstelle eine entsprechende signifikante Änderung im Radarsignal. Die Oberfläche der Schweißstelle verändert sich wiederum beim Erkalten und Erstarren, was sich seinerseits erneut im Sensorsignal des Radarsensors bemerkbar macht.

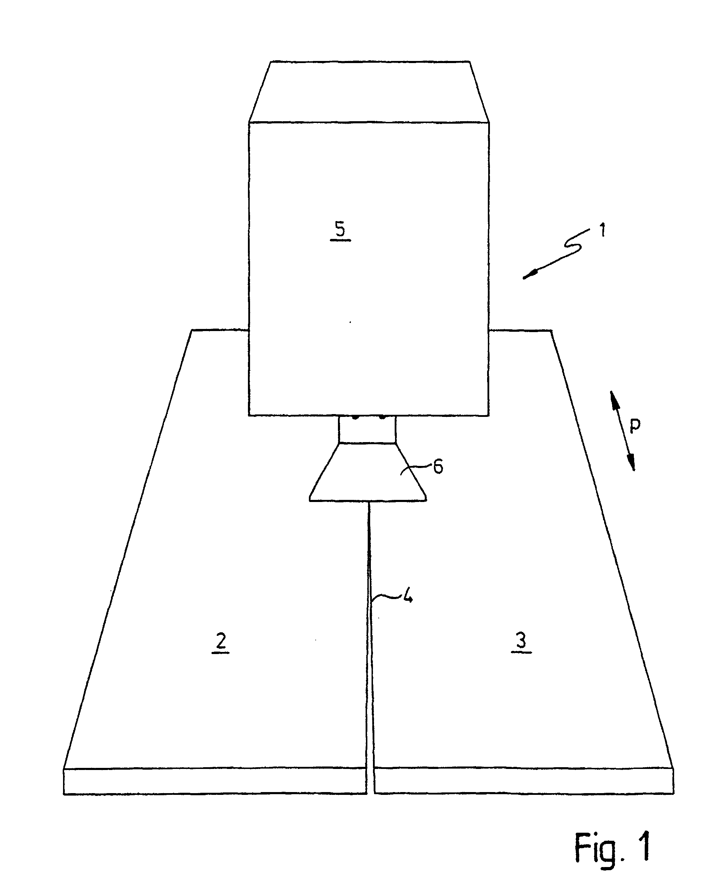

Ein Ausführungsbeispiel der Erfindung ist in der Zeichnung dargestellt und wird anhand der Figur nachfolgend näher erläutert.

Die einzige Figur zeigt
eine schematische Darstellung einer erfindungsgemäßen Überwachungsvorrichtung.

Die Vorrichtung 1 befindet sich oberhalb zweier Bleche 2, 3, die mittels einer nicht näher dargestellten Schweißvorrichtung über eine Schweißnaht 4 zu verbinden sind.

Ein Radarsensor 5, der in nicht näher erkennbarer Weise einen Sender sowie einen Empfänger zum Senden bzw. Empfangen der gewünschten elektromagnetischen Strahlung beinhaltet, befindet sich oberhalb der Schweißnaht 4. Die genannte Schweißvorrichtung kann beispielsweise durch den Radarsensor 5 verdeckt hinter diesem angeordnet sein. Der Radarsensor 5 ist mit einer Hornantenne 6 versehen, die auf die Schweißnaht 4 gerichtet ist.

Der Radarsensor 5 steht über nicht näher dargestellte Anschlußelemente mit einer entsprechenden Auswerteeinheit und gegebenenfalls mit der Steuerung der Schweißvorrichtung in Verbindung.

Die Überwachung des Schweißvorgangs kann zwar auch mit im Bezug zur Schweißnaht 4 stehendem Radarsensor 5 vorgenommen werden. Es hat sich jedoch bewährt, zur Auswertung das sogenannte Dopplersignal heranzuziehen, das sich bei einer Relativbewegung zwischen dem Radarsensor 5 und der Schweißnaht 4 ergibt. Hierzu werden in der beschriebenen Ausführungsform entweder der Radarsensor 5 oder die beiden Bleche 2, 3 parallel zur Schweißnaht 4 (vgl. Doppelpfeil P) bewegt, so daß sich eine entsprechende Frequenzverschiebung ergibt. Dieser Effekt wird dadurch unterstützt, daß der Radarsensor 5 zwar in einer die Schweißnaht 4 schneidenden, senkrecht zu den Blechen 2, 3 stehenden Ebene liegt, jedoch nicht senkrecht auf die Schweißnaht 4 gerichtet ist. Je spitzer der Blickwinkel des Radarsensors 5 bzw. der Hornantenne 6 bezüglich der Schweißnaht 4 ist, um so größer wirkt sich eine Relativbewegung in Form einer Dopplerverschiebung des Empfangssignals aus.

Je nach Art der Schweißnähte werden unterschiedliche Sendefrequenzen benutzt. Für feinere Laser-Schweißnähte eignen sich beispielsweise Wellenlängen im mm-Bereich (d. h. in einem Frequenzbereich in der Nähe von 100 GHz), für gröbere Schweißnähte von einigen cm-Breiten sind Wellenlängen in der Größenordnung von 1 cm (d. h. im Bereich von 30 GHz) geeignet und ausreichend.

Sofern die Halterung für das Schweißwerkzeug, beispielsweise für eine Laseroptik, auch den Radarsensor trägt, werden damit optimal kurze Abstände mit entsprechend kurzen Verzögerungszeiten zwischen dem Schweißen und der Kontrolle erreicht. Der Radarsensor stört den Schweißbetrieb unabhängig von der Art des Schweißwerkzeuges in keiner Weise. Der Ort der Beobachtung kann damit unmittelbar hinter der Schweißstelle, d. h. der Schmelzzone des zu verschweißenden Materials erfolgen.

Es ist sogar denkbar, unmittelbar die Schmelzzone des beim Schweißen verschmelzenden Materials zu beobachten.

In beiden Fällen können eindeutige Signale bei Fehlverhalten, beispielsweise bei Nichtverschweißung oder einer Verspritzung des Materials im Vergleich zu einer guten Schweißnaht generiert werden. Sofern die Schmelzzone beobachtet wird, ist das Kochen der Schmelze und deren Verpuffen bzw. Verspritzen unmittelbar zu beobachten.

Die Messung, d. h. das Senden und Empfangen der Radarund/oder Mikrowellenstrahlung kann kontinuierlich erfolgen. Je nach Art der Auswertung des Signals wird hierdurch jedoch eine gewisse Zeit in Anspruch genommen, so daß die Überwachung des Schweißvorgangs durch eine Aufeinanderfolge von Auswertezyklen erfolgt. Mit Hilfe entsprechend kurzer Meßzeitintervalle, was beispielsweise mittels entsprechend dimensionierter Rechnerleistung möglich ist, kann auch in einem solchen Fall eine quasi kontinuierliche Vermessung erfolgen.

Die Signalauswertung selbst kann mit allen bekannten und künftig bekannt werdenden Verfahren der niederfrequenten Wechselspannungscharakterisierung und deren Klassifizierung durchgeführt werden.

### Bezugszeichenliste:

- 1: Vorrichtung
- 2: Blech
- 3: Blech
- 4: Schweißnaht
- 5: Radarsensor
- 6: Hornantenne

## Patentansprüche

1. Schweißvorrichtung mit einer Überwachungsvorrichtung zur Überwachung von Schweißrähten, **dadurch gekennzeichnet, dass** ein Radarsensor (5) mit einem Sender und Empfänger zum Senden bzw. Empfangen von elektromagnetischer Strahlung im Radar und/oder Mikrowellenbereich vorgesehen ist.

2. Vorrichtung nach Anspruch 1 **dadurch gekennzeichnet, daß** eine automatische Steuerung der Schweißvorrichtung mit Hilfe des Radarsensorsignals vorgesehen ist.

3. Vorrichtung nach einem der vorgenannten Ansprüche **dadurch gekennzeichnet, daß** eine Ausschußerkennung mit Hilfe des Radarsensorsignals vorgesehen ist.

4. Vorrichtung nach einem der vorgenannten Ansprüche **dadurch gekennzeichnet, daß** der Radarsensor (5) und/oder die zu verschweißenden Gegenstände (2, 3) beweglich in Bezug zueinander angeordnet sind.

5. Vorrichtung nach einem der vorgenannten Ansprüche **dadurch gekennzeichnet, daß** der Radarsensor (5) und wenigstens teilweise das Schweißwerkzeug an einer gemeinsamen Halterung befestigt sind.

6. Vorrichtung nach einem der vorgenannten Ansprüche **dadurch gekennzeichnet, daß** eine Auswerteeinheit zur Auswertung einer Frequenzverschiebung zwischen dem Sende- und dem Empfangssignal vorgesehen ist.

7. Vorrichtung nach einem der vorgenannten Ansprüche **dadurch gekennzeichnet, daß** ein Wellenleiter vorgesehen ist.

8. Vorrichtung nach einem der vorgenannten Ansprüche **dadurch gekennzeichnet, daß** der Wellenleiter ein metallischer oder keramischer Hohlleiter ist.

9. Vorrichtung nach einem der vorgenannten Ansprüche **dadurch gekennzeichnet, daß** ein Fokussierungselement (6) zur Fokussierung der elektromagnischen Strahlung auf die Schweißstelle vorgesehen ist.

10. Vorrichtung nach einem der vorgenannten Ansprüche **dadurch gekennzeichnet, daß** das Fokussierungselement (6) einen Hornstrahler (6) und/oder eine Radarlinse umfaßt.

11. Vorrichtung nach einem der vorgenannten Ansprüche **dadurch gekennzeichnet, daß** eine im Bezug zur zu erwartenden Frequenzverschiebung schmalbandige Sendefrequenz verwendet wird.

12. Vorrichtung nach einem der vorgenannten Ansprüche **dadurch gekennzeichnet, daß** die Wellenlänge der abgestrahlten Strahlung in der Größenordnung der Breite der Schweißstelle oder kleiner ist.

13. Vorrichtung nach einem der vorgenannten Ansprüche, **dadurch gekennzeichnet, daß** eine Auswertung von Vibrationen im Bereich der Schweißstelle vorgesehen ist.

14. Vorrichtung nach einem der vorgenannten Ansprüche, **dadurch gekennzeichnet, daß** ein Schwingungsgenerator zur Erregung mechanischer Schwingungen der zu verschweißenden Teile bzw. der verschweißten Teile im Bereich der Schweißstelle vorgesehen ist.

15. Verfahren zum Schweißen **dadurch gekennzeichnet, daß** eine Vorrichtung nach einem der vorgenannten Ansprüche verwendet wird.

## Claims

1. A welding device having a monitoring device for monitoring weld seams,
**characterised in that** a radar sensor (5) having a transmitter and a receiver is provided for transmitting and receiving electromagnetic radiation in the radar and/or microwave range.

2. A device according to Claim 1,
**characterised in that** an automatic control for the welding device is provided with the aid of the radar sensor signal.

3. A device according to one of the above-mentioned Claims, **characterised in that** a reject detection with the aid of the radar sensor signal is provided.

4. A device according to one of the above-mentioned Claims, **characterised in that** the radar sensor (5) and/or the objects (2, 3) to be welded are disposed moveably in relation to each other.

5. A device according to one of the above-mentioned Claims, **characterised in that** the radar sensor (5) and at least to some extent the welding tool are fixed to a common mounting.

6. A device according to one of the above-mentioned Claims,
**characterised in that** an evaluation unit is provided to evaluate a frequency shift between the transmitted and the received signal.

7. A device according to one of the above-mentioned Claims, **characterised in that** a waveguide is provided.

8. A device according to one of the above-mentioned Claims, **characterised in that** the waveguide is a metal or a ceramic waveguide.

9. A device according to one of the above-mentioned Claims, **characterised in that** a focusing element (6) is provided to focus the electromagnetic radiation onto the weld.

10. A device according to one of the above-mentioned Claims, **characterised in that** the focussing element (6) comprises a horn radiator (6) and/or a radar lens.

11. A device according to one of the above-mentioned Claims, **characterised in that** a narrowband transmitting frequency in relation to the expected frequency offset is used.

12. A device according to one of the above-mentioned Claims, **characterised in that** the wave length of the emitted radiation is in the order of magnitude of the width of the weld or is less than it.

13. A device according to one of the above-mentioned Claims, **characterised in that** an evaluation of vibrations in the region of the weld is provided.

14. A device according to one of the above-mentioned Claims, **characterised in that** a vibration generator is provided to excite mechanical vibrations of the parts to be welded or of the welded parts in the region of the weld.

15. A welding method,
**characterised in that** a device according to one of the above-mentioned Claims is used.

## Revendications

1. Dispositif de soudure, comportant un dispositif de contrôle pour contrôler des cordons de soudure,
**caractérisé en ce qu'**un capteur radar (5) comportant un émetteur et un récepteur pour émettre ou recevoir un rayonnement électromagnétique dans le radar et/ou la plage des micro-ondes est prévu.

2. Dispositif selon la revendication 1,
**caractérisé en ce qu'**une commande automatique du dispositif de soudure à l'aide du signal du capteur radar est prévue.

3. Dispositif selon une des revendications précitées,
**caractérisé en ce qu'**une reconnaissance de rebuts à l'aide du signal du capteur radar est prévue.

4. Dispositif selon une des revendications précitées,
**caractérisé en ce que** le capteur radar (5) et/ou les objets à souder (2, 3) sont agencés de façon mobile l'un par rapport aux autres.

5. Dispositif selon une des revendications précitées,
**caractérisé en ce que** le capteur radar (5) et au moins partiellement l'outil de soudure sont fixés à un support commun.

6. Dispositif selon une des revendications précitées,
**caractérisé en ce qu'**une unité d'évaluation pour évaluer un décalage de fréquence entre le signal d'émission et le signal de réception est prévue.

7. Dispositif selon une des revendications précitées,
**caractérisé en ce qu'**un guide d'ondes est prévu.

8. Dispositif selon une des revendications précitées,
**caractérisé en ce que** le guide d'ondes est un guide creux métallique ou céramique.

9. Dispositif selon une des revendications précitées,
**caractérisé en ce qu'**un élément de focalisation (6) pour focaliser le rayonnement électromagnétique sur la soudure est prévu.

10. Dispositif selon une des revendications précitées,
**caractérisé en ce que** l'élément de focalisation (6) comporte une antenne à cornet (6) et/ou une lentille radar.

11. Dispositif selon une des revendications précitées,
**caractérisé en ce qu'**une fréquence d'émission à bande étroite relativement au décalage de fréquence à attendre est utilisée.

12. Dispositif selon une des revendications précitées,
**caractérisé en ce que** la longueur d'onde du rayonnement émis est de l'ordre de grandeur de la largeur de la soudure ou plus petite.

13. Dispositif selon une des revendications précitées,
**caractérisé en ce qu'**une évaluation des vibrations dans la zone de la soudure est prévue.

14. Dispositif selon une des revendications précitées,
**caractérisé en ce qu'**un générateur d'oscillations pour engendrer des oscillations mécaniques des pièces à souder ou des pièces soudées dans la zone de la soudure est prévu.

15. Procédé de soudage,
**caractérisé en ce qu'**un dispositif selon une des revendications précitées est utilisé.
